# EUROPEAN PATENT APPLICATION

(11) **EP 0 793 120 A1**
(43) Date of publication of application: **03.09.1997**
(21) Application number: 96915259.4
(22) Date of filing: 06.05.1996
(51) Int. Cl.: G02B 5/10

(54) **MOSAIC ADAPTIVE BIMORPH MIRROR**

(30) Priority: 19.03.1996 RU 96104503
(71) Applicant: YALESTOWN CORPORATION N.V., Curaçao, Netherlands Antilles (AN)
(72) Inventor: SAFRONOV, Andrei Gennadievich, Moskovskaya obl., 141070 (RU)
(74) Representative: BOVARD AG - Patentanwälte
(86) International application number: RU9600114
(87) International publication number: WO9709642

(57) **Abstract**

The invention relates to a controllable optics and can be used both for a static and a dynamic control of the radiation wavefront in a variety of optical devices and systems including astronomic telescopes, industrial laser techniques, and optical systems of guidance and tracking. The essence of the invention is that a mosaic adaptive bimorph mirror provides the increase in amplitude of controllable displacements of optical surface and in the mirror sensitivity. This is obtained due to the fact that the mirror uses multilayer bimorph structures to deform a reflecting surface. The bimorph structures are made as a piezoelectric elements comprising at least two piezoceramic plates coupled to the bottom of a sleeve-shaped housing. The inner cavity of the housing is filled with an elastic sealant. In addition, the proposed construction allows to reduce a labour input into the processes of the mirror production, assembling and polishing, to improve quality and stability of the initial shape of the optical surface, to increase the mirror strength and reliability.

## Description

### FIELD OF INVENTION.

The present invention relates to a controllable optics and can be used for a static and a dynamic control of the radiation wavefront in a variety of optical devices and systems including astronomical telescopes, industrial laser systems and optical systems of guidance and tracking.

### BACKGROUND OF THE INVENTION.

A deformable bimorph mirror is known (see V.I. Boykov, P.V. Nikolaev, A.V. Smirnov, Optiko-mekhanicheskaya promyshlennost, 1989, No 10, pp. 10-13) comprising a mirror plate 60 mm in a diameter, having 7 individual piezoceramic plates 18 mm in a diameter each attached to the rear surface of the mirror plate. This bimorph mirror has the following disadvantages: 1) loose packing of piezoceramic plates on the rear surface of the mirror plate that makes a direct control over the deformations in spacings between adjacent plates impossible; 2) small value of controllable displacements of optical surface; 3) low sensitivity (19.2 µm/kV maximum); 4) a cumbersome procedure of optical surface forming; 5) low quality and stability of the initial shape; 6) low strength and reliability of the mirror.

A cooled adaptive bimorph mirror is also known (see SU patent No 1808159) comprising a sleeve-shaped housing, a cooled reflecting plate, a main and an additional piezoelectric plates and 18 independent electrodes. The additional piezoceramic plate located between the reflecting and the main piezoceramic plates and rigidly coupled to them, is used independently on the main plate, that means that its control electrode has no electric contact with other electrodes. The purpose of this additional plate is to stabilise the initial shape of the reflecting surface of the mirror, to decrease an electromechanical hysteresis and, under certain conditions, to extend the range of controllable displacements of the reflecting surface. Reflecting surface of this bimorph mirror is deformed due to the bending moments arising at deformations of each piezoceramic plate and their further superposition; each piezoceramic plate is deformed parallel to the reflecting surface due to the reverse lateral piezoelectric effect. The device has a number of deficiencies as follows: existence of an electrical potential on the metallic housing of the mirror, small amplitudes of the reflecting surface controllable deformations (11.2 µm maximum), low sensitivity (37.3 µm/kV maximum), a cumbersome procedure of optical surface forming, low quality and stability of the initial shape, low strength and reliability of the mirror.

Other deformable bimorph mirror is known (see S.G. Lipson, E.N. Ribak, C. Schwartz, Proc. SPIE, 1994, vol. 2201, p. 703) comprising a reflecting plate 100 ÷ 150 mm in a diameter and a piezoelectric control layer formed on the rear surface of the reflecting plate as a mosaic made of 61 piezoelectric round or square plates 100 ÷ 150 mm in size. Disadvantages of this mirror are the following: small amplitudes of the reflecting surface controllable deformations, a cumbersome procedure of optical surface forming, low quality and stability of the initial shape as well as low strength and reliability of the mirror.

A deformable mirror is known taken as a prototype (see SU Copyright certificate on invention No. 1485180) comprising a sleeve-shaped housing with a cover and a reflecting surface made on the outer face of the housing bottom, individual piezoelectric elements placed inside of the housing within the boundaries of the reflecting surface, inside of cylindrical cavities with a projection at the centre of each of the cavities. A piezoelectric element is bent under a control voltage that causes deformation of the mirror reflecting surface. A projection serves as a mediator through which a force arising at the bending of the piezoelectric element is applied to the rear side of the mirror plate. It is necessary to stress that each piezoelectric element of this mirror is actually a bimorph actuator. The deficiencies of the mirror are as follows: 1) small amplitude of the reflecting surface controllable deformations (as a result of very small active rigidity of the piezoelectric element that results in a small value of force arising at bending); 2) low sensitivity; 3) a cumbersome procedure of mirror (exactly, of the housing) production, assembling (coupling and alignment of piezoelectric elements) and forming of its optical surface; 4) low quality and stability of the reflecting surface initial shape; 5) low strength and reliability of the mirror.

### SUMMARY OF THE INVENTION.

A technical object of the present invention is to increase controllable displacements of optical (reflecting) surface of deformable bimorph mirrors and to increase their sensitivity. In addition to this the proposed design makes the procedures of the mirror production, assembling and polishing easier, allows to increase quality and stability of the optical surface initial shape, to increase strength and reliability of the mirror.

The above-named technical object is obtained by a mosaic adaptive bimorph mirror comprising a sleeve-shaped housing with a cover and a reflecting surface formed on the outer face of the housing bottom separate piezoelectric elements are coupled to the inner surface of the housing bottom within the boundaries of the reflecting surface, each of the piezoelectric elements is made of at least two piezoceramic plates coupled in series parallel to the inner side of the housing bottom. The piezoceramic plates are provided with continuous electrodes made on their opposite surfaces. Polarisation vectors of adjacent piezoceramic plates are directed oppositely, their like electrodes are connected electrically. The housing is made in one piece with the bottom of a variable thickness. The reflecting surface is formed on the thicker central part of the bottom. The bottom of the housing can be made cooled, adjacent piezoceramic plates of at least one of the piezoelectric elements can be connected by means of an electrode common for both of the plates, the cavity of the hosing can be filled with an elastic sealant.

A greater, compared to the analogue, amplitude of the optical surface controllable displacements of the mosaic adaptive bimorph mirror for each individual piezoelectric element is obtained due to the increase in the value of each local bending moment arising in each local bimorph structure made of the given piezoelectric element and the reflecting plate. This is caused by the following reasons:
1) The use in each piezoelectric element of each extra piezoceramic plate gives rise to additional bending moments which are further summarised. This is a result of a specific design of the piezoelectric element which comprises at least two piezoceramic plates coupled in series parallel to the inner surface of the housing bottom with continuos electrodes made on the opposite surfaces and, therefore, the piezoelectric element is a multilayer one.
2) Deformations of piezoceramic plates comprising each piezoelectric element are synchronous and in phase (i.e., equal in values and signs). This is the result of a specific design of the piezoelectric element, all electrodes of which are continuous, polarisation vectors of adjacent piezoceramic plates are oppositely directed, their like electrodes are connected electrically.

In addition to the above, the increase, compared to the prototype, in amplitudes of controllable displacements of the mosaic adaptive bimorph mirror for each individual piezoelectric element are obtained due to the decrease in rigidity of the reflecting plate (the bottom of the housing) around its periphery. Therefore, the coupling of the reflecting plate becomes more elastic, that is the result of a specific design of a housing made in one piece with a bottom of variable thickness, the thicker central part of which carries the reflecting surface.

It should be pointed out that the first of the above-listed reasons is inherent in one of analogues, exactly in the cooled bimorph mirror (see SU Patent No. 1808159). Indeed, when an additional piezoceramic plate is included into to the mirror structure, its deformations causes additional bending moment which is added to the bending moment arising at deformation of the first piezoceramic plate. However in this case the increase in a total bending moment arising in a two-layer bimorph structure (and, therefore, increase in amplitude of the reflecting surface deformations) may not occur because when going from a one-layer bimorph mirror to a two-layer one the following three factors will compete:
1. Addition to the existing bending moment of an extra bending moment arising due to the presence of a new piezoceramic plate;
2. Decrease, in comparison with a one-layer mirror, in the value of bending moment caused by the deformations of the first piezoceramic plate, because , in the case of a two-layer mirror, this bending moment must compensate a counter-action not only of the reflecting surface but also of the second (a new one) piezoceramic plate;
3. Addition to the existing bending moment of the extra bending moment arising in the structure "the first (the old one) piezoceramic plate - the second (the new one) piezoceramic plate" due to the simultaneous deformations of both of the plates.

It is clear that with regard to the increase in the displacement amplitude of the controllable optical surface of the bimorph mirror, the first of the above-listed factors acts positively and the second acts negatively. Effect of the third factor is positive only if the extra bending moment arising in the structure "the first (the old one) piezoceramic plate - the second (the new one) piezoceramic plate" has the same sign as the bending moment arising due to deformations of the first (the old) piezoceramic plate. But this is possible only if deformations of the second (new) piezoceramic plate has the same sign and exceeds in value the deformations of the first (old) piezoceramic plate. For all other cases effect of the third factor is negative even when deformations of both of piezoceramic plates are of the same sign but differ in value.

It is clear from the above-discussed that, when going from a one-layer mirror to a two-layer one, the first two factors are of a fundamental nature and always exist, and, therefore the second factor crucially can't be removed. Effect of the third factor may be turned into a positive if in every moment of time during the mirror operation a control voltage on the second piezoceramic plate is of the same sign and exceeds in value a control voltage on the first plate. Unfortunately, all the ways to exert a control over piezoceramic plates in a two-layer bimorph mirror in such a manner are strictly inconvenient. Indeed, first, all these ways require the availability of two electrically independent control channels. Second, the value of control voltage on the second piezoceramic plate needs to be constantly compared with the value of voltage on the first piezoceramic plate that is very uncomfortable to do when the mirror operates in a dynamic mode.

When going from a two-layer mirror to a three-layer and further to a multilayer one, the effect of all of three above-named factors becomes stronger, exactly:
1. The extra bending moment to be added to the existing bending moment is smaller with every new piezoceramic plate, because the total rigidity of the bimorph structure increases more and more;
2. Values of bending moments caused by deformations of all piezoceramic plates which are already in use, but not only of the first one, decrease, because each piezoceramic plate in a multilayer mirror must compensate the counter-action of the reflecting surface and of all other piezoceramic plates;
3. Extra bending moments are added arising in all bimorph structures made of each pair of adjacent piezoceramic plates.

By analogy with a two-layer bimorph mirror it is clear, that for a multilayer mirror it is impossible to obtain the above named object of the invention (i.e., increase in amplitude) by a simple increase of the number of piezoceramic plates in use. In addition, it is more difficult for a multilayer mirror than for a two-layer one to obtain a positive effect of the third factor (when the control voltage on all of the piezoceramic plates are of the same polarity and its value are more for each following plate than for a preceding one), and it is practically impossible in a dynamic mode. Therefore, practically always effect of the third factor on the amplitude of deformations is negative.

The present invention overcomes this situation by total elimination of the third factor due to a special design where all the couplings of each pair of adjacent plates in each of the piezoelectric elements are not bimorph. This is realised when in each of the piezoelectric elements any two of adjacent piezoceramic plates are deformed absolutely uniformly, or, in other words, all other things being equal, a control voltage of the same value is applied to each piezoceramic plate of an individual piezoelectric element. This is why the deformations of all piezoceramic plates of an individual piezoelectric element are synchronous and in phase, that is, as noted above (see item 2, p. 3) the second reason leading to the named technical object. The corresponding distinctive feature of the invention is that all the electrodes of piezoceramic plates in every piezoelectric element are made continuous, polarisation vectors of adjacent piezoceramic plates of every piezoelectric element are directed oppositely and their like electrodes are electrically connected. Hence, only a combination of this distinctive feature with the first one (that each piezoelectric element is made of at least two piezoceramic plates coupled in series parallel to the inner surface of the housing bottom with continuous electrodes on their opposite surfaces and therefore the piezoelectric element is a multilayer structure) provides the named technical object of the invention for every individual piezoelectric element compared both to the prototype and analogues.

On the other hand, it should be noted, that even if the effect of the third factor is excluded, the competition between the first two factors still takes place It determines the existence of the optimum number of additional piezoceramic plates in each piezoelectric element with regard to the increase in sensitivity and controllable deformations of each piezoelectric element. That is to say, that the addition of every extra piezoceramic plate into a piezoelectric element structure (even providing the orientation and coupling as defined above) will lead not to the increase in amplitude of deformations of this piezoelectric element, but even to its decrease. In other words, the further increase in the number of piezoceramic plates comprising a piezoelectric element will cause such an increase in the local rigidity of a given local multilayer bimorph structure that will not allow to obtain the named technical object.

The present invention overcomes this situation by the following: the increase in a local rigidity of each local multilayer bimorph structure is compensated to a variable degree by more elastic, compared to the prototype and analogues, coupling of the reflecting plate to the housing of the mirror in comparison. To do this, it appears to be enough to decrease the rigidity of the reflecting plate (or the bottom of the housing) around the periphery. This is, as noted above (see p. 3), the third reason which allows to obtain the named technical object. Here, the distinctive feature is the fact that the housing is designed in one piece with the bottom of a variable thickness, and the reflecting surface formed on the thicker central part of the bottom.

Note that it is every local rigidity of each local multilayer bimorph structure which increase is compensated by the decrease in rigidity around the periphery of the reflecting plate (provided by its more elastic coupling). That means, that the above argument is true for every piezoelectric element of the mosaic adaptive bimorph mirror, not only for those located around the periphery of the mirror. This is possible because of a substantially non-local nature of the response function of the mosaic adaptive bimorph mirror. That means that at deformations of any of the piezoelectric elements (independently on its location) a deformation of the whole reflecting plate, but not only of the part corresponding to the location of the given piezoelectric element, occurs . But, naturally, the effect of the third distinctive feature (that the sleeve-shaped housing is made as a single piece with a bottom of a variable thickness and the reflecting surface is formed on the thicker central part of the bottom) upon the amplitude of the reflecting surface deformations will be more significant for peripheral piezoelectric elements of the mosaic mirror. This, in particular , allows to use piezoceramic plates of various quality for peripheral and inner piezoelectric elements of the mirror. Obviously, all other things being the same, it is possible to use a greater number of piezoceramic plates (layers of piezoceramics) for peripheral piezoelectric elements than for inner ones.

Notice that the use in the chosen prototype only of the third distinctive feature of the proposed invention (that the sleeve-shaped housing is made in one piece with a bottom of a variable thickness and the reflecting surface is formed on the thicker central part of the housing bottom) with the aim to obtain the above-named technical object (to increase values of the reflecting surface deformations) is impossible. In other words, the use in the prototype of this factor alone will not lead to the named above technical object. The reason is a local nature of response functions of the prototype mirror. That means that, in this mirror, at deformation of one piezoelectric element alone only the area of the reflecting surface corresponding to the location of a given piezoelectric element is deformed. Hence amplitude of these local deformations are determined solely by the local rigidity of the reflecting plate in the area of location of a given piezoelectric element. There the characteristic size of the deforming area is determined not by the size of the piezoelectric element, but by the characteristic size of the projection on the rear surface of the reflecting plate, through which a force arising at the bending of the piezoelectric element is transferred to the reflecting plate. Because of a significantly smaller size of the projection compared to the piezoelectric element it is clear that even for peripheral piezoelectric elements of the prototype mirror the realisation of a more elastic coupling of the reflecting plate can in no way affect local rigidity in the location area of these piezoelectric elements (in any case, in the location area of the corresponding projections). of these piezoelectric elements (in any case, in the location area of the corresponding projections).

Therefore, only a combination of all above named distinctive features provides to obtain with a guarantee a significant increase in amplitude of the controllable displacements of the optical surface of the mosaic adaptive bimorph mirror compared both to the prototype mirror and analogues, that means to obtain with a guarantee the above named technical object. Note that the named technical object (increase in deformation amplitudes) is obtained both for every individual piezoelectric element of the mirror and for the total package of the piezoelectric elements because a superposition principal is applicable for simultaneous deformations of several (or all) piezoelectric elements.

To put it differently, the combination of features characterising a design of the housing and piezoelectric elements allows to reduce the overall rigidity of the element which carries the reflecting surface and of the piezoelectric elements, that allows to increase significantly controllable deformations of the mirror reflecting surface. Although the harnessing of adjacent piezoceramic plates with polarisation vectors opposite in direction is known (see USA patent No. 4257686), but only a combination of all the above listed features with the features characterising shape of the housing and arrangement of electrodes allows to obtain a correlation between the decrease in mass of the element supporting the reflecting surface and piezoelectric elements, and overall rigidity of all listed elements, that means to obtain the above named technical object.

Sensitivity of the bimorph mirror is a ratio between value of optical surface deformations and applied control voltage. As the control voltage does not show the increase compared to the prototype mirror, a direct consequence of the increase in amplitude of controllable displacements for each individual piezoelectric element and for the total package of the piezoelectric elements is the increase in the overall (that means for the whole package of piezoelectric elements) and local (for every individual piezoelectric element) sensitivity of the proposed mosaic bimorph mirror. If the minimal possible thickness of piezoelectric plates comprising each multilayer bimorph structure (each piezoelectric element) is provided and the number of plates in each piezoelectric element increased proportionally, the increase in the mirror sensitivity is obtained, among other reasons, due to the reduction of the control voltage.

Decrease in a labour input into the process of construction of the proposed mosaic bimorph mirror is obtained due to the simplification of the housing design compared to the prototype mirror, namely due to the exclusion of the following elements out of the structure: 1) cavities for piezoelectric elements placing; 2) fitting spaces for these piezoelectric elements; 3) projections in the cavities through which a force is applied to a rear surface of the mirror plate.

Assembling procedure for the proposed mosaic bimorph mirror becomes easier compared to the prototype mirror due to the simplification of piezoelectric element attachment to the mirror housing. Indeed, as a simplest case of the proposed invention, piezoelectric elements may be glued to the rear surface of the mirror plate by a conducting glue. While for the prototype mirror it is required; 1) to place piezoelectric element accurately in the corresponding cavities; 2) to fix the piezoelectric elements in these cavities over the cylindrical (peripheral) surface; 3) to couple in some way the piezoelectric elements to the projections in centres of cavities. It is clear, that the described procedure is far more complex that the simple gluing of the piezoelectric elements to the rear surface of the mirror plate. Apart of this, the proposed invention provides significantly more convenient and simple arrangement of voltage supply to each of the piezoelectric elements.

Decrease in a labour input into the process of the optical surface forming (polishing) in the mosaic bimorph mirror and improvement of the quality of its initial shape are obtained by providing a sleeve-shaped housing made in one piece with a bottom of a variable thickness, the reflecting surface is formed on a thicker central part of the bottom. Immediate results arising from the above distinctive feature of the present invention are the following:
1. a more uniform contact between the optical surface of the mirror and the polishing tool during the polishing process;
2. peripheral part of the housing, exactly the walls of the housing from the bottom side, is excluded out of the polishing process.

In order to obtain additional capabilities, namely to provide the possibility for the proposed mosaic mirror to operate in high-powered optical (laser) systems, the reflecting plate of the mirror, or the bottom of the housing, can be made cooled.

Other distinction of the mosaic adaptive bimorph mirror is that adjacent piezoceramic plates comprising at least one piezoelectric element are connected to each other by means of a common electrode. It makes the construction simpler and more convenient. In fact, in this case, only one electrode located in the point of coupling of the plates is used instead of two electrodes of two different piezoceramic plates.

Further distinction of the present invention is that the cavity of the housing is filled with an elastic sealant. The elastic sealant dampens the pressure of the polishing tool on the reflecting surface during the polishing process and therefore the contact of optical surface with the polishing tool is more uniform, that makes the process of optical surface forming less labour intensive and provides the improvement of the initial shape quality. Stability of the initial reflecting surface of the mirror as well as increase in its strength and reliability are obtained due to the damp by elastic sealant of external impacts, vibrations and other loads acting onto the mirror housing during the mirror exploitation. The mirror reliability is also increased because the sealant protects the inside structure of the mirror against a direct damage. Apart of this, use of the sealant serves to return the housing bottom into its initial position.

### BRIEF DESCRIPTION OF THE DRAWINGS.

The above-listed advantageous of the present invention will be more clear from the following description of the embodiment and drawings.

Fig. 1 is a schematic sectional view of a mosaic adaptive bimorph mirror, each piezoelectric element of which comprises three piezoelectric plates.

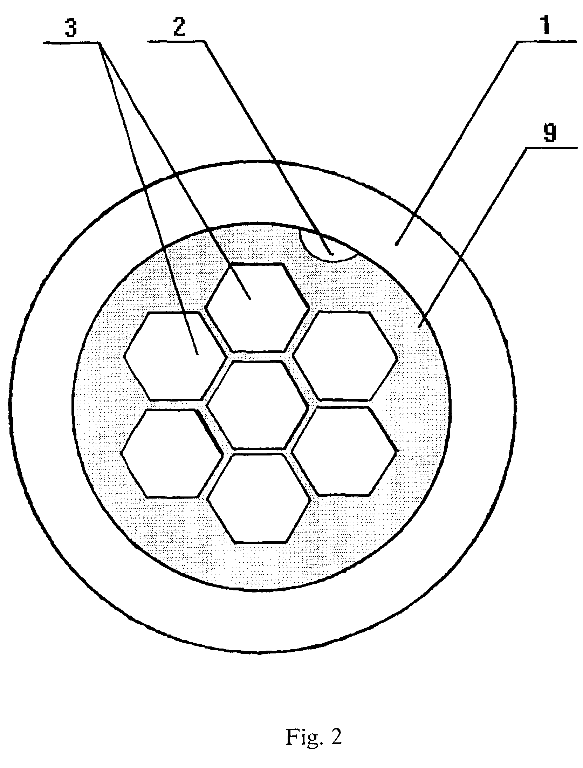

Fig. 2 is a view from the side of a control piezoelectric layer for the case when the control layer comprises 7 piezoelectric elements.

### DESCRIPTION OF THE PREFERRED EMBODIMENT.

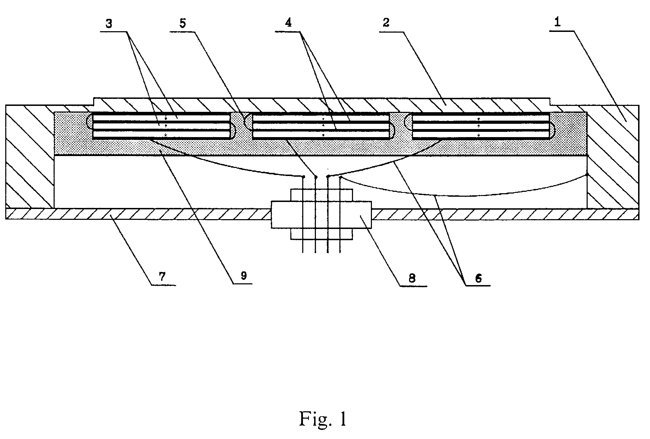

The proposed device consists of a housing 1, comprising a reflecting plate 2, piezoceramic plates 3, each provided with control electrodes 4, connecting wires 5, electric wires 6, a rear-side cover 7, an electric connector 8 and an elastic sealant 9. Arrows on fig. 1 indicate the direction of initial polarisation for each of piezoceramic plates. Adjacent like electrodes for each pair of piezoceramic plates in each of the piezoelectric elements are indicated by the common solid line.

A mosaic adaptive bimorph mirror operates as follows. A control voltage is applied to every piezoceramic plate 3 of each piezoelectric element through the electric connector 8, by means of electric wires 6, connecting wires 5 and control electrodes 4. It is clear that the voltage can be different for different piezoelectric elements. All the piezoceramic plates 3, will be deformed due to the inverse lateral piezo-electric effect. Due to the orientation of the piezoceramic plates and electrode 4 arrangement see fig. 1, deformations will be equal for all piezoceramic plates 3 comprising one piezoelectric element. In other words each local triple layer (therefore, a multilayer) piezoelectric structure will deform as a unit, i.e. as a single plate of the equivalent thickness. Therefore, with the chosen orientation of plate of the equivalent thickness. Therefore, with the chosen orientation of piezoceramic plates 3 and arrangement of the electrodes 4, each local multilayer piezostructure (or each piezoelectric element) is equivalent to a monolithic piezoceramic plate.

Keeping the above in mind, it is easy to understand that each coupling made of the reflecting plate 2 and a local multilayer piezostructure (single piezoelectric element) is equivalent to the coupling of two monolithic plates, one of them being a reflecting and another a piezoceramic one. Such a coupling is known (see, for example, Kokorowski S.A. , J. Opt. Soc. Am., 1979, v. 69, N 1, p. 181-187) to be a semi-passive bimorph structure. Therefore, under the electrical voltage applied to any of local multilayer piezoelectric structures (i.e., individual piezoelectric element), the reflecting surface of the mirror will be deformed in a certain manner, namely will sag due to the local bending moment arising in a local bimorph structure, with the deflection maximum in the attachment point of the given piezoelectric element. In correspondence with the above description, due to the combination of all the listed distinctive features, the technical solution proposed by the present invention provides with a guarantee a significant increase in amplitude of controllable displacements of the mirror optical surface for each separate piezoelectric element as well as for the whole package.

As a sensitivity of the deformable mirror is a ratio of the value of reflecting surface deformations to the applied control voltage (for a single piezoelectric element or for the total package), it is seen from the above consideration, that in the proposed mosaic adaptive bimorph mirror the combination of all distinctive features which characterise the design of the housing and of the piezoelectric elements, also provides with a guarantee the increase in sensitivity (both local and total) compared to known analogues and the prototype. It is obvious, that in the case when local bimorph structures (that means, separate piezoelectric elements) use more than three piezoelectric plates 3, as well as in the case of multilayer piezoelectric elements, all above given arguments are still valid, providing that the piezoceramic plates 3 are oriented, electrodes 4 are connected and the housing 1 and reflecting plate 2 are designed as described above, see fig. 1.

It should be mentioned that with the aim to provide the possibility for the proposed mirror to operate in high-powered optical (laser) systems, the reflecting plate (bottom of the housing) can be made cooled. For example, it can comprise a system of channels arranged immediately under the reflecting surface allowing water or other coolant to pass through. The channels are not showed on the figures.

The most simple and convenient embodiment of the present invention is obtained when adjacent piezoceramic plates comprising individual piezoelectric elements are connected by means of a common electrode. Indeed, in this case a multilayer piezoelectric element can be made, for example, by caking of thin piezoelectric films over a platinum, instead of a simple coupling of individual piezoceramic plates having electrodes on the both surfaces of the electrode. In this case, the piezoceramic plates themselves are not provided with control electrodes, and the platinum spacers serve for this purpose. In addition to this, a thermal treatment of piezoelectric films occurring during the caking turns them into rigid (but thin) piezoelectric plates. As a result, piezoelectric plates comprising the multilayer piezoelectric elements appear to be coupled by means of a common electrode.

Advantages of use of an elastic sealant filling the inside cavity of the mirror housing has been already noted above. It only remains to add, that during the filling of the housing cavity by a liquid sealant and its further drying out, an adhesion to the housing walls as well as to the surface of the piezoelectric element occurs. So, the sealant acts as a kind of spring that returns the reflecting surface (the housing bottom) into its initial position under any loads acting in the process of the mirror manufacturing or exploitation.

Other important advantage of the proposed embodiment of the mosaic adaptive bimorph mirror is the possibility to reduce the thickness of individual piezoceramic plates 3 in order to reduce values of control voltage without decrease in amplitudes of the reflecting surface useful deformations, and, therefore, to increase the sensitivity still further. For the known analogues and the prototype there is a lower limit of the thickness of a single piezoceramic plate because its rigidity must be large enough to provide a maximum deflection (sag) of the reflecting surface. From the other hand, the overall thickness of the bimorph structure has a lower limit too, because its rigidity must provide the ability to form the optical surface and polish the mirror. Therefore, for known analogues and the prototype a maximum allowable thickness does exist which allows to obtain a deformable bimorph mirror with an effective performance.

From the described above it is clear that for a proposed mosaic adaptive bimorph mirror there is no any limits in thickness for individual piezoceramic plates 3. It is obvious that the possible deficiency in rigidity of each local piezoelectric structure (or individual piezoelectric element) can be easily compensated by the increase in the number of piezoceramic plates 3 comprising the piezoelectric elements. Therefore, the proposed embodiment provides the possibility to produce low-voltage high-sensitivity multichannel adaptive bimorph mirrors demonstrating large amplitude of the controllable displacements of the optical surface.

### INDUSTRIAL APPLICATION.

In closing it is pertinent to note, that the proposed device, including the one illustrated in the figures, can be realised using a standard industrial equipment, known materials and technological procedures. Piezoceramic plates used in the mirror construction are also a standard industrial product.

Compared to adaptive mirrors comprising discrete control actuators (for example, compared to deformable mirrors of French company Laserdot SAM52 and SAM249, comprising, respectively, 52 and 249 piezoactuators, see J.-P. Gaffard, P. Jagourel, P. Gigan, Proc. SPIE, 1994, Vol. 2201, p. 688-702), the proposed device, all other characteristics being the same, demonstrates at least following advantages: significantly smaller weight and dimensions, significantly lesser cost.

In practice the proposed invention can be used in any optical system to exert a dynamic correction (compensation) of optical beam phase distortion with a high degree of accuracy, for example in astronomic telescopes with the aim to improve the image quality of distant light sources (that means to compensate a turbulence of terrestrial atmosphere.

## Claims

1. A mosaic adaptive bimorph mirror comprising a sleeve-shaped housing with a cover and a reflecting surface on the outer face of the housing bottom, individual piezoelectric elements, placed inside of the housing within the boundaries of the reflecting surface, characterised in that each of the piezoelectric elements is made of at least two piezoelectric plates each provided with continuos electrodes on their opposite surfaces, coupled in series and parallel to the inner surface of the bottom, the polarisation vectors of adjacent piezoelectric plates are opposite in direction and their like electrodes are connected electrically, the housing is made in one piece with a bottom of a variable thickness, the thicker central part of which supports a reflecting surface.

2. A mirror as claimed in Claim 1 characterised in that the housing bottom is made cooled.

3. A mirror as claimed in claims 1 or 2 characterised in that adjacent piezoceramic plates of at least one of the piezoelectric elements are connected by means of a common electrode.

4. A mirror as claimed in claims 1 - 3, characterised in that the cavity of the housing is filled with an elastic sealant.
